# FASCICULE DE BREVET EUROPEEN

(11) **EP 0 598 853 B1**
(45) Date de publication et mention de la délivrance du brevet: **17.01.1996**
(21) Numéro de dépôt: 92923836.8
(22) Date de dépôt: 14.10.1992
(51) Int. Cl.: A01M 29/00

(54) **DISPOSITIF DE PREVENTION CONTRE LES NUISANCES DE VOLATILES**
SCHUTZVORRICHTUNG GEGEN VOGELSCHADEN
DEVICE FOR PREVENTING BIRD NUISANCES

(30) Priorité: 16.10.1991 FR 9112761
(43) Date de publication de la demande: 01.06.1994
(73) Titulaire: SPIT ECOPIC LINE sarl, F-94120 Fontenay-sous-Bois (FR)
(72) Inventeur: NEGRE, Gilles, F-60330 Le Plessis-Belleville (FR)
(74) Mandataire: Bonneau, Gérard Cabinet Bonneau Conseil en Propriété Industrielle
(86) Numéro de dépôt international: FR9200972
(87) Numéro de publication internationale: WO9307744

(56) Documents cités:
- EP-A- 0 340 108
- DE-U- 8 906 216
- US-A- 2 887 730
- US-A- 3 282 000
- CENTRAL PATENTS INDEX, BASIC ABSTRACTS JOURNAL Derwent Publications Ltd.,
- London, GB; AN 79-08425B
- PATENT ABSTRACTS OF JAPAN vol. 14, no. 209 (M-968)27 Avril 1990

## Description

La présente invention est relative à un dispositif de prévention contre les nuisances des volatiles et plus particulièrement à un dispositif pour empêcher que des volatiles ne se posent sur certaines surfaces déterminées.

On sait que les volatiles se posent volontiers sur les surfaces d'appui, même les plus étroites qu'ils trouvent sur les constructions humaines : corniches, rebords de fenêtres, statues, faîtes des murs, gouttières, portails, infrastructures de ponts, pylônes, mâts, etc...

Ce stationnement représente une nuisance dans la mesure où les volatiles, par leurs déjections, salissent et détériorent non seulement les surfaces d'appui elles-mêmes, mais encore toutes les parties de la construction situées en contrebas de ces surfaces. L'atteinte à l'aspect esthétique qui en résulte, tout comme la corrosion qui "gangrène" la matière, obligent ainsi à de fréquentes et coûteuses rénovations des parties atteintes de la construction. Ce genre de construction est par ailleurs fréquemment situé à proximité d'activités humaines. C'est le cas notamment dans les villes, où les chutes de fiente ainsi que le bruit fait par les volatiles sont de nature à dévaloriser tout un quartier, qu'il comprenne des habitations, des magasins ou bien des établissements de restauration.

L'un des moyens les plus efficaces pour prévenir cette nuisance consiste à recouvrir les surfaces sur lesquelles le stationnement des volatiles est indésirable, d'un dispositif comportant une embase depuis laquelle s'étendent du côté opposé auxdites surfaces, des picots dissuadant les volatiles de se poser. On démontre expérimentalement que le dispositif ne blesse pas les volatiles mais empêche seulement l' atterrissage et la marche. Un tel dispositif est décrit dans la demande de brevet européen numéro 0 340 108, effectuée également par l' inventeur de la présente invention et publiée le 2 novembre 1989. L'embase du dispositif, lisse sur ses deux faces, est d'une épaisseur volontairement réduite pour des raisons de coût de fabrication et d' impact esthétique sur les surfaces à recouvrir. Pour ces mêmes raisons, les picots sont de diamètre réduit, tandis que l' espacement entre eux est commandé par la taille minimum des volatiles contre lesquels on veut se prémunir. Pour assurer la fixation des picots à l'embase, des canaux de diamètre très légèrement supérieur à celui des picots, sont percés au travers de l' embase dans lesquels on vient loger lesdits picots et les y fixer avec une salle usuelle. La fixation de l'embase sur les surfaces à recouvrir se fait également par collage usuel.

Un tel dispositif présente toutefois les trois inconvénients majeurs suivants:
La qualité du système de fixation des picots à l'embase se dégrade avec le temps, sous l'action combinée des intempéries (soleil, gel), et des tentatives répétées des volatiles de "forcer" cet obstacle à leur atterrissage. Peu à peu, la colle se détériore, et les picots sont un à un arrachés de l'embase, réduisant ainsi très vite à néant l'efficacité du dispositif. L'action des intempéries est de plus préjudiciable à la matière dont est faite l'embase: elle prend une couleur jaunâtre inesthétique, et perd ses propriétés élastiques, de sorte que si une pression latérale est exercée par un volatile sur un picot, l'embase peut se casser autour du point de fixation de ce picot, rendant dès lors le dispositif inefficace.

La colle utilisée pour fixer l'embase sur les surfaces à recouvrir est également sensible aux intempéries. De plus, étant en contact avec la construction, elle est susceptible de dégrader celle-ci par réaction chimique. Enfin, si le dispositif est ôté, des particules en surface de la construction peuvent être arrachées en même temps que la colle.

C'est donc un objet de la présente invention de proposer un dispositif qui ne présente pas à la fois tous les inconvénients sus-mentionnés.

Le dispositif de la présente invention comprend une embase pour être fixée sur une surface à-protéger contre l'atterrissage de volatiles, depuis laquelle s'étendent, du côté opposé à ladite surface, des picots dissuasifs. L'embase comporte des canaux, et chaque picot une protubérance obtenue par écrasement de la matière dont il est fait, de taille légèrement supérieure à la section des canaux. Les picots sont introduits en force dans les canaux de manière à assurer un sertissage.

Dans un mode de réalisation de l'invention, l'embase du dispositif est fabriquée en polyméthylméthacrylate .

Dans un autre mode de réalisation, la colle utilisée pour fixer l'embase sur la surface à protéger est une colle silicone neutre.

Plus particulièrement la présente invention comprend une embase traversée de part en part par des canaux dans chacun desquels est introduit un picot présentant une protubérance de taille légèrement supérieure à la section des canaux et obtenue par écrasement de la matière dont est fait le picot, ladite protubérance coopérant avec l'embase, par déformation de la matière de l'embase à l'intérieur de chacun des canaux, pour sertir le picot à l'embase.

L'invention sera mieux comprise grâce à la description détaillée qui suit, accompagnée des figures suivantes:
Fig.1 montre une vue en perspective du dispositif de la présente invention.
Fig.2 montre une vue en coupe de la fixation d'un picot sue l'embase,
Fig.3 montre une vue en perspective d'un autre mode de réalisation de la présente invention.

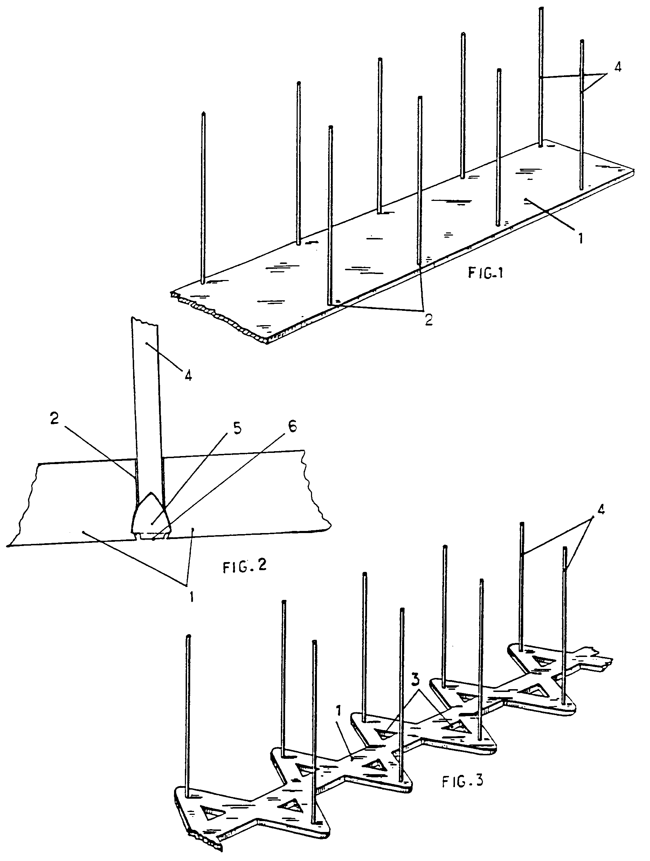

Fig.1 montre une vue en perspective du dispositif de la présente invention. Une embase 1 comporte des canaux 2 dans chacun desquels est engagée un picot 4. L'embase est fixée sur la surface à protéger contre l'atterrissage de volatiles. Elle peut être réalisée en un grand nombre de matériaux y compris le bois, le métal et autres matières plastiques, mais l'utilisation du polyméthylméthacrylate est préférée peur sa résistance aux chocs, aux écarts de température et rayons ultraviolets du soleil, permettant d'assurer la tenue dans le temps des propriétés élastiques comme de la couleur de l'embase.

A la fabrication, l' axe des canaux peut présenter avec le plan de l'embase un angle compris entre 30 et 90 degrés pour le cas où une inclinaison des picots par rapport à la surface à protéger serait nécessaire.

La face supérieure de l'embase ne présente aucune aspérité de nature à accrocher poussière, détritus, feuilles mortes, etc... La face inférieure au contraire peut être grenaillée de manière à assurer une adhérence optimum avec la colle de fixation à la surface à protéger.

Fig.2 montre une vue en coupe de la fixation d'un picot sur l'embase. L'embase 1 comporte un canal 2 dans lequel est logée une extrémité 6 du picot 4 . Celui-ci présente une protubérance 5 de taille légèrement supérieure à la section du canal, à une distance de l'extrémité du picot inférieure à la longueur du canal.

Le canal traverse l'embase de part en part, auquel cas, lors de la fabrication, le picot est engagé par l'orifice situé sur la face inférieure de l'embase, puis poussé en force iusqu'à se que l'extrémité du picot affleure ladite face inférieure. Le blocage de la protubérance par déformation de la matière de l'embase au niveau de l'intérieur du canal, assure le sertissage de l'ensemble. La protubérance permet aussi de réaliser le centrage et l'alignement automatiques du picot dans l'axe du canal.

La protubérance est obtenue par écrasement de la matière dont est fait le picot: celle-ci doit donc être suffisament molle et ne pas être trop fragilisée par ce traitement. Parmi les matières ayant les qualités requises, l'acier inoxydable 302 (DIN 17224) permet d'obtenir un picot de diamètre 1.3mm, et une protubérance de 1.53mm. La protubérance peut avoir une formé conique comme représenté, sans que cela soit indispensable. De même, les picots et les canaux peuvent, avoir indifférament une section parallélépipédique, ronde ou triangulaire. L'outil qui permet de réaliser l'écrasement est un poinçon ordinaire bien connu de l'homme du métier.

Fig.3 montre une vue en perspective d'un autre mode de réalisation de la présente invention. Une découpe particulière de l'embase 1 est représentée qui n'est qu'une des découpes possibles. Des évidements de matière 3 sont pratiqués. Leur forme n'est pas critique (triangulaire sur la figure), mais ils affectent un profil en dépouille, c'est à dire que leurs bords sont évasés du côté de la face inférieure de l' embase. La surface à protéger est enduite de colle et le dispositif de l'invention pressé contre cette surface. Ladite colle remonte alors le long des bords des évidements 3,et l'excédent vient former un capuchon qui déborde sur la face supérieure de l'embase, et scelle parfaitement celle-ci à la surface à protéger, après durcissement de la colle.

La colle retenue dans un mode de réalisation de l'invention est une colle silicone neutre qui adhère sur n'importe quelle surface, et est sans effets chimiques secondaires. De plus, elle ne pénètre pas les matériaux de la surface à protéger, même les plus poreux, de sorte que si on désire ôter le dispositif, il suffit d'arracher l'ensemble embase plus colle durcie, sans aucun dommage pour la surface.

## Revendications

1. Dispositif de prévention contre les nuisances des volatiles comprenant une embase (1) traversée de part en part par des canaux (2) dans chacun desquels est introduit un picot (4), étant caractérisé en ce que ledit picot présente une protubérance (5) de taille légèrement supérieure à la section des canaux obtenue par écrasement de la matière dont est fait le picot, et que ladite protubérance coopère avec l'embase, par déformation de la matière de l'embase à l'intérieur de chacun des canaux, pour sertir le picot à l'embase.

2. Le dispositif de la revendication 1 caractérisé en ce que les picots (4) et l'axe des canaux (2) présentent avec le plan de l'embase un angle compris entre 30 et 90 degrés.

3. Le dispositif selon l'une des revendications 1 ou 2, caractérisé en ce que l'embase (1) est réalisée en polyméthylméthacrylate.

4. Le dispositif selon l'une des revendications 1 à 3, caractérisé en ce que ladite matière du picot (4) est de l'acier inoxydable.

5. Le dispositif de la revendication 4 caractérisé en ce que ledit picot (4) présente un diamètre de 1,3mm, et ladite protubérance (5) un diamètre de 1,53mm.

6. Le dispositif selon l'une des revendications 1 à 5, caractérisé en ce que ladite protubérance (5) présente une forme conique.

7. Le dispositif selon l'une des revendications 1 à 4, caractérisé en ce que ledit picot (4) et chacun desdits canaux (2) présentent une section parrallélépipédique.

8. Le dispositif selon l'une des revendications 1 à 7, caractérisé en ce que l'embase (1) comporte en outre des évidements (3) affectant un profil en dépouille, c'est à dire dont les bords sont évasés vers la face inférieure de ladite embase.

9. Le dispositif selon l'une des revendications 1 à 8, caractérise en ce que qu'il comprend en outre une couche de colle silicone neutre appliquée sur la face inférieure de l'embase (1) pour fixer ledit dispositif en position de prévention.

10. Le dispositif de la revendication 9 lorsque dépendant de la revendication 8, caractérisé en ce que ladite colle silicone neutre remonte le long des bords desdits évidements (3) et forme un capuchon débordant sur la face supérieure de l'embase (1), qui scelle le dispositif en position de prévention lorsque la colle durcit.

## Claims

1. Bird proofing device comprising a base support (1), canals (2) extending completely through said base support, and a spike element (4) being inserted in each of said canals, said device being characterized in that said spike element has a protruding portion (5) of a size slightly larger than the diameter of the canals, obtained by flattening out of the material of which the spike element is made, and that said protruding portion cooperates with the base support by deforming of the material of the base support inside each of the canals so as to secure the spike element to the base support.

2. The device according to claim 1 characterized in that said spike elements (4) and the axis of the canals (2) are inclined at an angle of from 30 to 90 degrees with the surface of the base support.

3. The device according to claim 1 or 2, characterized in that the base support (1) is made of polymethylmethacrylate.

4. The device of any of the claims 1 to 3, characterized in that said material of the spike element (4) is stainless steel.

5. The device according to claim 4, characterized in that said spike element (4) has a diameter of 1.3mm, and said protruding portion (5) a diameter of 1.53mm.

6. The device of any of the claims 1 to 5, characterized in that said protruding portion (5) has a cone shape.

7. The device of any of the claims 1 to 4, characterized in that said spike element (4) and each of said canals (2) have a parallelepiped as a cross-section.

8. The device according to any of the claims 1 to 7, characterized in that the base support (1) also comprises hollow regions (3) formed in its material, having side-walls sloped and splayed out downwardly from the top to bottom surface of the base support.

9. The device according to any of the claims 1 to 8, characterized in that it further comprises a layer of neutral silicone glue covering the bottom side of the base support (1) so as to attach said device against the area to protect.

10. The device according to claim 9 when dependent upon claim 8, characterized in that said neutral silicone glue overflows along the side-walls of said hollow regions (3), on to the top surface of the base support (1), where it secures the device against the area to protect with a form similar to a screw head when the glue has hardened.

## Patentansprüche

1. Vorrichtung zum Schutz gegen die Belästigung durch Vögel, umfassend einen Sockel (1), der von Kanälen (2) ganz durchquert ist, in deren jeden eine Nadel (4) eingeführt ist, dadurch gekennzeichnet, daß diese Nadel eine Ausbeulung (5) aufweist, die etwas größer als der Querschnitt der Kanäle ist und durch Stauchen des Werkstoffs erhalten ist, aus dem die Nadel besteht, und daß diese Ausbeulung mit dem Sockel durch Verformung des Werkstoffs des Sockels im Inneren jedes der Kanäle zusammenwirkt, um die Nadel in den Sockel zu quetschen.

2. Vorrichtung von Anspruch 1, dadurch gekennzeichnet, daß die Nadeln (4) und die Achse der Kanäle (2) mit der Ebene des Sockels einen Winkel zwischen 30 und 90 Grad aufweisen.

3. Vorrichtung nach einem der Ansprüche 1 oder 2, dadurch gekennzeichnet, daß der Sockel (1) aus Polymethylmethacrylat hergestellt ist.

4. Vorrichtung nach einem der Ansprüche 1 bis 3, dadurch gekennzeichnet, daß dieser Werkstoff der Nadel (4) rostfreier Stahl ist.

5. Vorrichtung von Anspruch 4, dadurch gekennzeichnet, daß diese Nadel (4) einen Durchmesser von 1,3 mm und diese Ausbeulung (5) einen Durchmesser von 1,53 mm aufweist.

6. Vorrichtung nach einem der Ansprüche 1 bis 5, dadurch gekennzeichnet, daß diese Ausbeulung (5) eine konische Form aufweist.

7. Vorrichtung nach einem der Ansprüche 1 bis 4, dadurch gekennzeichnet, daß diese Nadel (4) und jeder dieser Kanäle (2) einen parallelepipedischen Querschnitt aufweisen.

8. Vorrichtung nach einem der Ansprüche 1 bis 7, dadurch gekennzeichnet, daß der Sockel (1) außerdem Aussparungen (3) besitzt, die ein Schrägeprofil annehmen, d.h. deren Ränder auf die Unterseite dieses Sockels zu ausgeweitet sind.

9. Vorrichtung nach einem der Ansprüche 1 bis 8, dadurch gekennzeichnet, daß er außerdem eine Schicht von neutralem Siliconkleber umfaßt, der auf die Unterseite des Sockels (1) aufgetragen ist, um diese Vorrichtung in Schutzstellung zu befestigen.

10. Vorrichtung von Anspruch 9, wenn er von Anspruch 8 abhängig ist, dadurch gekennzeichnet, daß dieser neutrale Siliconkleber längs der Ränder dieser Aussparungen (3) aufsteigt und eine Kappe bildet, die auf der Oberseite des Sockels (1) übersteht und die Vorrichtung in Schutzstellung versiegelt, wenn der Kleber härtet.
